# EUROPÄISCHE PATENTANMELDUNG

(11) **EP 2 325 654 A1**
(43) Veröffentlichungstag der Anmeldung: **25.05.2011**
(21) Anmeldenummer: 10190337.5
(22) Anmeldetag: 08.11.2010
(51) Int. Cl.: G01P 3/44, G01P 3/483

(54) **Wälzlageranordnung mit einer Sensoreinheit**

(30) Priorität: 16.11.2009 DE 102009044542
(71) Anmelder: SICK STEGMANN GmbH, 78166 Donaueschingen (DE); Schaeffler Technologies GmbH & Co. KG, 91074 Herzogenaurach (DE); INA-Drives & Mechatronics GmbH & Co oHG, 98527 Suhl (DE)
(72) Erfinder: Siraky, Josef, 78166 Donaueschingen (DE); Schmidt, Dirk, 98527 Suhl (DE); Kegeler, Jörg, 98553 Schleusingen (DE)
(74) Vertreter: Ludewigt, Christoph

(57) **Zusammenfassung**

Die Erfindung betrifft ein Wälzlager (01) mit einem drehbaren Lagerteil (05) und einem feststehenden Lagerteil (04) und mit einer kapazitiven Sensoreinheit (02). Die Sensoreinheit (02) umfasst ein drehbar gelagertes Sensorelement (08), das mit dem drehbaren Lagerteil (05) verbunden ist, und ein ortsfestes Sensorelement (09). Die Sensorelemente (08, 09) bilden einen Kondensator. Mindestens eines der Sensorelemente (08, 09) trägt eine erste Maßverkörperung (14, 16), so dass bei einer relativen Bewegung der Sensorflächen (08, 09) eine Änderung der Kapazität des Kondensators erfolgt. Die Sensoreinheit umfasst weiterhin ein Mittel zum Erzeugen eines periodischen elektrostatischen Feldes zwischen den Sensorplatten und eine Verarbeitungs- und Verstärkungselektronik zur Auswertung der Kapazitätsänderung.

## Beschreibung

Die Erfindung betrifft eine Wälzlageranordnung mit einer kapazitiven Sensoreinheit zur Erfassung von Winkelposition und/oder Drehzahl eines drehenden Lagerteils.

Sowohl Sensoren zur Erfassung der Winkelposition und Drehzahl von Objekten, als auch Wälzlageranordnungen mit solchen Sensoren sind aus dem Stand der Technik hinlänglich bekannt. Bei den bekannten Sensoren werden magnetoresistive, optische oder induktive Systeme verwendet.

Beispielsweise ist es aus der EP 0 395 783 A1 bekannt, dass die im Wälzlager ohnehin vorhandenen Bauteile (z.B. Käfig) als Träger einer geraden Zahl diskreter Magnetfelder wechselnder Polarität benutzt werden. Die Rotation dieser Bauteile wird durch einen oder mehrere Halleffektsensoren, die auf ein ohnehin vorhandenes stationäres Bauteil (ruhender Lagerring) aufgebracht sind, in ein elektrisches Signal gewandelt.

Aus der DE 101 05 824 A1 ist ein Wälzlager bekannt, mit dem eine Erfassung eines Drehwinkels der beiden Lagerringe gegeneinander möglich ist. Das beschriebene Lager umfasst einen Drehwinkelsensor mit einem Messbereich von mehr als 360°. Die Sensoranordnung umfasst ein erstes Skalenelement, das auf dem Käfig des Wälzlagers angeordnet ist und ein zweites Skalenelement, das mit dem Innenring oder mit dem Außenring drehfest verbunden ist. Die Skalenelemente tragen eine optische Codierung und sind durch optische Sensoren abtastbar. Das System ist äußerst anfällig gegen Verschmutzung.

Die DE 197 48 996 C1 befasst sich ebenfalls mit einem Kugellager mit integriertem Sensor. Der Sensor dient der Erfassung einer Relativbewegung der beiden Lagerringe zueinander. Dazu ist ein zumindest abschnittsweise ausgebildetes Polrad 5 vorhanden, das mit dem rotierenden Lagerteil verbunden ist. Weiterhin dient ein Sensor zur Abtastung des Polrades. Das Polrad ist vorzugsweise aus einem magnetisierbaren Material bereitgestellt und trägt magnetische Markierungen, die von einem magnetoresistiven Sensor abtastbar sind.

Weiterhin ist es bekannt, Zustandsfunktionen eines Wälzlagers mittels Beschleunigungsaufnehmern zu ermitteln, welche den Körperschall des abrollenden Wälzlagers erfassen und auswerten. Die Auswertung dient vorrangig der Erkennung von Schäden am Wälzlager.

Aus dem Stand der Technik sind außerdem kapazitive Näherungsschalter bekannt, welche beispielsweise der Bereichsüberwachung dienen oder eine Drehzahl- oder Drehwinkelerfassung gestatten. Eine Veränderung des Dielektrikums zwischen den Kondensatorplatten verursacht hier eine Kapazitätsänderung, welche entsprechend ausgewertet wird. Um bei diesem Verfahren (Drehzahlmessung) brauchbare Ergebnisse zu erhalten, sind relativ große Flächen des kapazitiven Sensors erforderlich.

Aus der DE 600 16 395 T2 sind verbesserte Vorrichtungen und Verfahren zur kapazitiven Positionsbestimmung bewegter Objekte bekannt. Dabei sind ein stationäres und ein bewegtes Element in einem elektrostatischen Feld angeordnet. Eines der Elemente trägt ein elektrisch aktives Muster, welches das elektrostatische Feld zwischen den Elementen bei Drehung des bewegten Elementes moduliert. Die Veränderungen des Feldes werden entsprechend ausgewertet.

Der Erfindung liegt die Aufgabe zugrunde, ein Wälzlager mit einer Sensoreinheit zu schaffen, welche einen einfachen und magnetisch unempfindlichen Aufbau besitzt sowie robust gegen Umwelteinflüsse und Verschmutzungen ist.

Die Aufgabe wird durch eine Wälzlageranordnung mit den Merkmalen des Anspruchs 1 gelöst.

Vorteilhafte Ausgestaltungen der Erfindung sind in den Unteransprüchen angegeben.

Eine erfindungsgemäße Wälzlageranordnung umfasst ein drehbares und ein festes Lagerteil und eine kapazitive Sensoreinheit. Die Sensoreinheit umfasst ein erstes drehbar gelagertes Sensorelement (Rotor), das mit dem drehbaren Lagerteil verbunden ist, und weiterhin mindestens ein ortsfestes elektrisch leitendes zweites Sensorelement (Stator). Die kapazitive Sensoreinheit ist derart gestaltet, dass durch den Rotor bei dessen Drehung eine örtliche Änderung des Dielektrikums erfolgt. Der Rotor selbst ist dabei Bestandteil des Dielektrikums.

Die Sensoreinheit umfasst weiterhin ein Mittel zum Erzeugen eines vorzugsweise periodischen elektrostatischen Feldes, das an den Kondensator angelegt wird.

Stator und Rotor sind vorzugsweise gemäß einer der Ausführungsformen des in der DE 600 16 395 T2 beschriebenen kapazitiven Weggebers ausgestaltet. Dieses Dokument wird insoweit ausdrücklich in den Offenbarungsgehalt der vorliegenden Patentanmeldung einbezogen, sodass auf eine detaillierte Beschreibung von Stator und Rotor sowie deren Zusammenwirken hier verzichtet werden kann.

Beispielsweise kann der Stator zwei Platten bzw. Scheiben umfassen, zwischen denen der Rotor angeordnet ist. Dabei bilden die beiden Platten den Kondensator, der Rotor das Dielektrikum des Kondensators (gemeinsam mit den zwischenliegenden Luftschichten).

Es ist aber ebenso möglich, dass der Stator aus nur einem Element besteht, dem gegenüberliegend der Rotor angeordnet ist. Dabei sind beide Kondensatorplatten auf dem einen Statorelement angeordnet, während der Rotor eine Koppelplatte trägt, welche das elektrische Feld leitet. Eine der beiden auf dem Stator gebildeten Kondensatorplatten umfasst mehrere über den Umfang verteilte Segmente. Eine der Kondensatorplatten fungiert als Sender des elektrostatischen Feldes, die andere als Empfänger. Wenn der Sender in Segmente aufgeteilt ist, erfolgt die Erzeugung des elektrostatischen Feldes durch eine phasenverschobene Einspeisung einer Wechselspannung in den einzelnen Segmenten des Senders. Unter Kenntnis des eingespeisten Feldes kann aus der Ausgangsleistung des Kondensators der Sinus und Kosinus des Drehwinkels des Rotors ermittelt werden, wenn der Empfänger in Segmente unterteilt ist.

Die beiden Sensorelemente sind gegeneinander verdrehbar. Eines der beiden Sensorelemente, vorzugsweise der Rotor, trägt eine Maßverkörperung, die bewirkt, dass bei einer relativen Bewegung der Sensorelemente eine Änderung der Kapazität des Kondensators, bzw. eine Modulation des elektrostatischen Feldes erfolgt. Die Maßverkörperung kann dabei durch geometrische Gestaltung des Sensorelementes oder beispielsweise durch eine leitfähige Beschichtung mit einem entsprechenden Muster gestaltet werden.

Die Sensoreinheit umfasst weiterhin eine Verarbeitungs- und Verstärkungselektronik zur Auswertung der Kapazitätsänderung.

Die Vorteile der Erfindung sind insbesondere darin zu sehen, dass die Lageranordnung mit integrierter Sensoreinheit besonders einfach aufgebaut, preiswert herstellbar und robust gegenüber Umwelteinflüssen und Verschmutzungen beispielsweise im Schmiermittel ist.

Vorteilhafterweise entfallen in zahlreichen Anwendungen separate Winkelmesssysteme, was eine Reduzierung des Bauraums, der Kosten und der Montagezeit bewirkt. Eine erfindungsgemäße Wälzlageranordnung, d.h. eine Lager-Messsystem-Kombination kann beispielsweise auch in Synchron- oder auch Asynchronmotoren zur elektronischen Kommutierung sowie inkrementellen und absoluten Winkelbestimmung direkt im Lager der Motorwelle eingesetzt werden.

In einer bevorzugten Ausführungsform der Erfindung ist die Maßverkörperung durch sinusförmige Zyklen gebildet, die vorzugsweise als Ausschnitte, Ausnehmungen, oder durch eine unterschiedliche Stärkenverteilung, Massenverteilung oder Beschichtung auf einer oder auf beiden der Sensorflächen geformt sind. Die Anzahl der Zyklen der Maßverkörperung bestimmt die Grund-Auflösung der Messgröße. Die Gesamtauflösung ist dann aus der Grundauflösung multipliziert mit einem Interpolationsfaktor pro Zyklus bestimmbar.

In besonders vorteilhaften Ausführungsformen ist eine zweite Maßverkörperung auf einer der Sensorflächen vorgesehen. Wenn die zweite Maßverkörperung eine 360°-Struktur darstellt, kann die absolute Winkelposition ermittelt werden. Dies ist auch dann möglich, wenn die zweite Maßverkörperung eine Struktur darstellt, deren Zyklenanzahl so gestaltet ist, dass das Verhältnis Feinstruktur zu Grobstruktur auf 360° bezogen immer eindeutig ist (z.B. 16 Zyklen Feinstruktur, 3 Zyklen Grobstruktur).

Es ist ebenso eine Ausführungsform möglich, die nur die oben beschriebene zweite Maßverkörperung vorsieht, in der die hier als erste Maßverkörperung bezeichnete nicht vorhanden ist. Dann ist eine eindeutige Winkelzuordnung z.B. auf 360° oder 120° bei geringerer Genauigkeit erreichbar, was aber in einigen Anwendungsfällen völlig ausreichend ist.

Durch eine Kombination der Maßverkörperungen ist es möglich, eine eindeutige Rotorposition mit hoher Genauigkeit und Auflösung zu erhalten.

Durch wiederum weitere Maßverkörperungen sind eine mehrkanalige Feinabstimmung, sowie die Erfassung weiterer Lagerschwingungen möglich. Die Maßverkörperungen sollten dann von Grob bis Fein abgestuft werden.

Weiterhin hat es sich als vorteilhaft erwiesen, wenn das elektrostatische Feld in verschiedenen Segmenten der Kondensatorfläche einen unterschiedlichen (z.B. phasenverschobenenen) Verlauf aufweist.

Erfindungsgemäß übernimmt die Lageranordnung die Aufgaben der Führung der Maßverkörperung bzw. des bewegten Sensorelementes und die Aufnahme einer drehenden Welle bzw. eines rotierenden Bauteils, während direkt an das Lager die Sensoreinheit gekoppelt ist. Somit entfällt in vielen Anwendungsfällen eine separate Sensorlösung zur Erfassung einer Drehzahl oder Drehrichtung.

In einer vorteilhaften Ausgestaltungsform der Erfindung ist die Sensoreinheit in einem separaten Gehäuse angeordnet, welches montagefertig mit dem Wälzlager kombinierbar ist, wobei eines der Sensorelemente verdrehfest mit dem drehenden Lagerteil des Wälzlagers verbunden wird. Durch das Gehäuse wird in diesem Fall vorteilhafterweise eine gute elektrische Abschirmung der Sensoreinheit erreicht. Über das stabile Gehäuseteil erfolgt die Vorspannung des Lagers bzw. die axiale Kraftübertragung auf das Lager. Sensorgehäuse und Maßverkörperung können vorteilhafterweise vom Lager getrennt werden. Dies kann beispielsweise zu Reparaturzwecken oder zum Recycling erforderlich sein.

In einer besonders vorteilhaften Ausführungsform der Erfindung ist die Sensoreinheit direkt in das Wälzlager integriert. Dazu können die Sensorelemente mit Maßverkörperungen im Zwischenraum zwischen den Lagerringen angeordnet sein.

Vorteilhafterweise umfasst das Wälzlager einen digitalen Absolutwertausgang für die Position und/oder einen analogen Sinus-/Cosinus-Ausgang zur Erfassung der Drehzahl.

Selbstverständlich kann das Wälzlager weitere Sensoren umfassen, wobei die Verarbeitungselektronik deren Signale zusätzlich verarbeitet. Die weiteren Sensoren können beispielsweise Temperatur, Schwingung und/oder Betriebsdauer des Wälzlagers erfassen.

Da die von der oben beschriebenen Sensoreinheit gelieferten Messwerte auch von ggf. auftretenden Schwingungen am Lager abhängig sind, können diese Einflüsse vorteilhafterweise bei geeigneter Auswertung des Messsignals auch als Maß für eine Schwingung ausgefiltert werden, sodass auf zusätzliche Sensoren, wie beispielsweise Beschleunigungsaufnehmer, verzichtet werden kann. Dabei lassen Änderungen der Kapazität, die phasenunabhängig sind, auf Frequenzänderungen (beispielsweise durch Lagerschäden) schließen.

Weitere Beispiele für die Gestaltung der Sensorelemente und Auswertverfahren können der DE 600 16 395 T2 entnommen werden, die insoweit in den Offenbarungsumfang der vorliegenden Anmeldung einbezogen wird.

Eine bevorzugte Ausführungsform der Erfindung wird nachfolgend anhand der Figuren näher erläutert. Es zeigen:
- Fig. 1:: eine räumliche Darstellung eines Wälzlagers mit einer kapazitiven Sensoreinheit;
- Fig. 2:: eine Längsschnittdarstellung gemäß Fig. 1;
- Fig. 3:: eine Maßverkörperung eines Rotors eines kapazitiven Sensors.

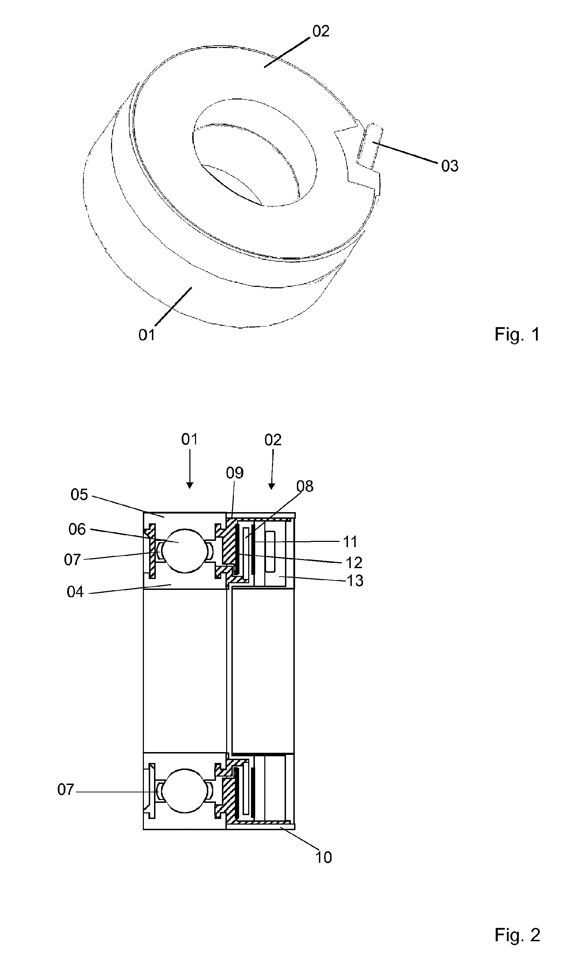

Fig. 1 zeigt eine erfindungsgemäße Wälzlageranordnung als Kombination eines Wälzlagers 01 mit einer kapazitiven Sensoreinheit 02. Die Sensoreinheit 02 ist auf einer Seitenfläche des Wälzlagers 01 quasi vollflächig mit diesem verbunden und enthält vorzugsweise eine Durchführung für die gelagerte Welle (nicht dargestellt). Die Verbindung zwischen Sensoreinheit und Wälzlager kann z.B. durch Kleben, durch eine kraftschlüssige und/oder formschlüssige Anbringung erreicht werden. Der Formschluss erfolgt bei dieser Ausführungsform an den Lagerringen am Einstich für den Dichtungsring (nicht dargestellt). Der Außendurchmesser der Sensoreinheit 02 ist dabei vorzugsweise geringfügig kleiner, als der des Wälzlagers 01. Die Sensoreinheit 02 umfasst eine elektrische Zuleitungseinrichtung 03, über die sie einerseits mit Energie versorgt wird und andererseits die erfassten Signale zur Weiterverarbeitung ausgegeben werden. Die Signale können beispielsweise über eine digitale Schnittstelle an ein Steuergerät übertragen werden.

Fig. 2 zeigt eine Längsschnittdarstellung der in Fig. 1 gezeigten Kombination von Wälzlager 01 und Sensoreinheit 02. Das Wälzlager 01 umfasst in bekannter Weise einen Innenring 04, einen Außenring 05 und dazwischen angeordnete Wälzkörper 06, welche in einem Käfig 07 geführt sind.

Die Sensoreinheit 02 umfasst einen Rotor 08 als drehbar gelagertes erstes Sensorelement, welcher mit dem drehbaren Innenring 04 drehfest verbunden ist. Ein Stator 09 als ortsfestes zweites Sensorelement ist drehfest mit einem Sensorgehäuse 10 verbunden. Der Stator 09 umfasst zwei Platten 11, 12, die einen Kondensator bilden, dessen Kapazität laufend in einer Verarbeitungs- und Verstärkungselektronik 13 gemessen wird, die vorzugsweise ebenfalls im Sensorgehäuse 10 angeordnet ist. Mindestens eine der Platten ist segmentiert, d.h. in Umfangsrichtung in verschiedene Segmente aufgeteilt.

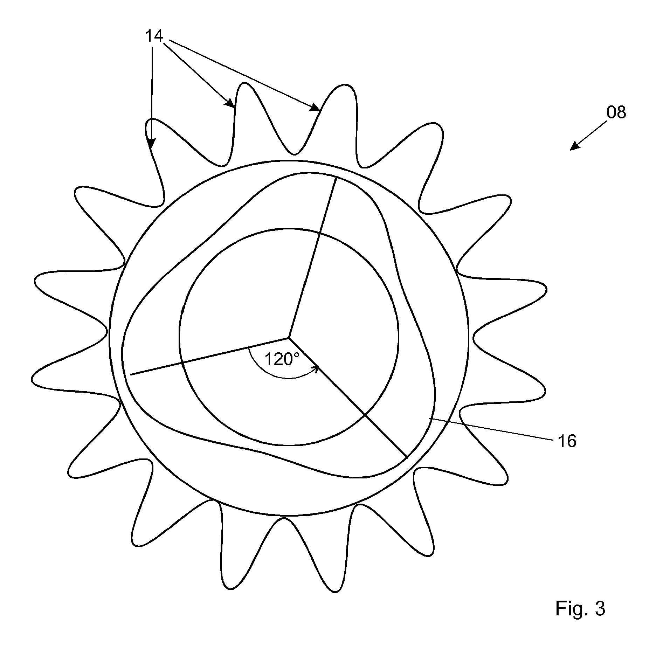

Über die Modulation der Kapazität durch die winkelabhängige Überdeckung der Segmente auf einer der Platten 11, 12 wird ein übliches Sinus-/Cosinussignal gebildet. Dieses dient der Positionsbestimmung und bildet zusammen mit einer 120°-Struktur die Grundlage für eine absolute Positionsbestimmung (Fig. 3).

Eine Maßverkörperung (siehe Fig. 3) ist auf dem Rotor 08 vorgesehen. Durch die Gestaltung der Maßverkörperung wird die Genauigkeit der Positionsbestimmung beeinflusst.

Die Gestaltung der Sensorelemente 08, 09 erlaubt es außerdem, bestimmte Schwingungsfrequenzen zu detektieren, die Aussagen zu Verschleiß und Belastung des Lagers gestatten.

Bei drehbarem Außenring kann die Konfiguration einfach angepasst werden.

Fig. 3 zeigt beispielhaft die mögliche Gestaltung des Rotors 08 als erstes Sensorelement in einer Draufsicht. Der gezeigte Rotor 08 weist in seinem äußeren Umfangsbereich sechzehn sinusförmige Zyklen 14 auf, sodass eine zahnradähnliche Form des Rotors 08 entsteht. Durch diese Zyklen bzw. deren Anzahl wird die erste Maßverkörperung gebildet.

Im radial inneren Bereich des Rotors 08 ist eine Struktur 16 mit einer Materialverstärkung erkennbar. Diese stellt eine zweite Maßverkörperung dar, die aus drei über den Umfang verteilten sinusförmigen Zyklen gebildet ist, mit der beispielsweise die 360°-Struktur (3 x 120°) hinreichend genau festgelegt ist. Damit ist eine Bestimmung der absoluten Drehwinkelposition des Rotors 08 möglich.

Werden mehrere Maßverkörperungen auf dem Rotor vorgesehen, so werden vorzugsweise für jede der Maßverkörperungen separate Segmentierungen am Stator vorgenommen.

Die Verarbeitungs- und Verstärkungselektronik erzeugt ein analoges Sinus-/Cosinussignal für die Drehzahlermittlung und vorzugsweise auch ein digitales Signal für eine absolute Lagebestimmung. Es können prinzipiell aber beliebige Signalformen zur Übertragung und Auswertung der Signale verwendet werden.

Die zwei Signalformen werden über eine Messsystemleitung an einen externen Controller übertragen. Das analoge Sinus-/ Kosinussignal, welches in der Regel zur Lageregelung verwendet wird, kann durch ein voll digitales Signal ersetzt werden. Dann ist die Übertragung an einen Controller über nur eine Motorleitung möglich, d.h. bei Anwendungen in einem Motor kann die Messsystemleitung eingespart werden.

In anderen Ausführungsformen der Erfindung ist es möglich, mit der gleichen Sensorflächenanordnung parallel Vibrationen zwischen Außen- und Innenring des Lagers sowie die Lagertemperatur zu bestimmen. Auftretende Schwingungen führen ebenfalls zu einer überlagerten Kapazitätsänderung, sodass bei geeigneter Filterung ein Signal erhalten werden kann, welches die auftretenden Schwingungen repräsentiert.

### Bezugszeichenliste

- 01 -: Wälzlager
- 02 -: kapazitive Sensoreinheit
- 03 -: Zuleitungseinrichtung
- 04 -: Innenring
- 05 -: Außenring
- 06 -: Wälzkörper
- 07 -: Käfig
- 08 -: Rotor
- 09 -: Stator
- 10 -: Sensorgehäuse
- 11 -: Platte
- 12 -: Platte
- 13 -: Elektronik
- 14 -: sinusförmiger Zyklus, erste Maßverkörperung
- 15 -: -Struktur, zweite Maßverkörperung

## Patentansprüche

1. Wälzlager (01) mit einem drehbaren Lagerteil (04) und einem feststehenden Lagerteil (05) sowie mit einer mit dem Wälzlager (01) fest verbundenen oder direkt in das Wälzlager (01) integrieren Sensoreinheit (02), **dadurch gekennzeichnet, dass** die Sensoreinheit (02) umfasst:
- ein erstes drehbar gelagertes Sensorelement (08), das mit dem drehbaren Lagerteil (04) verbunden ist;
- ein zweites ortsfestes elektrisch leitendes Sensorelement (09), das mit mindestens zwei Kondensatorplatten (11, 12) einen Kondensator bildet;
- ein Mittel zum Erzeugen eines elektrostatischen Feldes zwischen den Kondensatorplatten;
- eine Verarbeitungs- und Verstärkungselektronik (13) zur Auswertung der Kapazitätsänderung des Kondensators
wobei das erste Sensorelement (08) im Dielektrikum des gebildeten Kondensators angeordnet ist, und wobei mindestens eines der Sensorelemente (08, 09) eine erste Maßverkörperung (14) trägt, so dass bei einer relativen Bewegung der Sensorelemente (08, 09) eine Änderung der Kapazität des Kondensators eintritt.

2. Wälzlager (01) nach Anspruch 1, **dadurch gekennzeichnet, dass** die erste Maßverkörperung durch Materialausnehmungen, unterschiedliche Stärkenverteilung, Massenverteilung oder durch eine Beschichtung auf dem ersten Sensorelement (08) gebildet ist.

3. Wälzlager (01) nach Anspruch 1 oder 2, **dadurch gekennzeichnet, dass** die erste Maßverkörperung eine 120°- oder 360°-Struktur darstellt.

4. Wälzlager nach einem der Ansprüche 1 bis 3, **dadurch gekennzeichnet, dass** das zweite Sensorelement (09) durch zwei parallel angeordnete Kondensatorplatten (11, 12) gebildet ist, zwischen denen das erste Sensorelement (08) angeordnet ist.

5. Wälzlager nach Anspruch 4, **dadurch gekennzeichnet, dass** eine der Platten (11, 12) eine Segmentierung aufweist, wobei eine phasenversetzte Einspeisung des elektrostatischen Feldes in die Segmente dieser Platte (11, 12) erfolgt oder ein phasenversetzter Verlauf der Kondensatoränderung in den Segmenten dieser Platte erfasst wird.

6. Wälzlager (01) nach einem der Ansprüche 1 bis 5, soweit nicht auf Anspruch 3 rückbezogen, **dadurch gekennzeichnet, dass** das erste Sensorelement (08) eine zweite Maßverkörperung (16) umfasst, die vorzugsweise eine 360°-Struktur (16) darstellt.

7. Wälzlager (01) nach einem der Ansprüche 1 bis 6, **dadurch gekennzeichnet, dass** zumindest die erste Maßverkörperung (14) eine Form sinusförmiger Zyklen (13) aufweist.

8. Wälzlager (01) nach einem der Ansprüche 1 bis 7, **dadurch gekennzeichnet, dass** die erste Maßverkörperung (14) durch das drehbare Lagerteil (04) geführt ist und eine Welle oder ein Bauteil, deren bzw. dessen Drehzahl oder Drehwinkel zu bestimmen ist, vom drehbaren Lagerteil (04) aufgenommen ist.

9. Wälzlager (01) nach einem der Ansprüche 1 bis 8, **dadurch gekennzeichnet, dass** sie einen digitalen Absolutwertausgang umfasst.

10. Wälzlager (01) nach einem der Ansprüche 1 bis 9, **dadurch gekennzeichnet, dass** sie weitere Sensoren umfasst, insbesondere zur Erfassung von Temperatur, Schwingung und/oder Betriebsdauer des Wälzlagers, wobei die Verarbeitungselektronik deren Signale zusätzlich verarbeitet.
